# EUROPÄISCHE PATENTSCHRIFT

(11) **EP 1 952 964 B1**
(45) Veröffentlichungstag und Bekanntmachung des Hinweises auf die Patenterteilung: **30.05.2012**
(21) Anmeldenummer: 08150820.2
(22) Anmeldetag: 30.01.2008
(51) Int. Cl.: B29C 45/00, B29C 37/00, B29C 44/04, B29C 44/58

(54) **Verfahren zur Herstellung einer Instrumententafel**
Method for producing a dashboard
Procédé de fabrication d'un tableau de bord

(30) Priorität: 30.01.2007 EP 07101381
(43) Veröffentlichungstag der Anmeldung: 06.08.2008
(73) Patentinhaber: SO.F.TER. TECNOPOLIMERI SRL, 47122 Forli FC (IT)
(72) Erfinder: Völkel, Mark, 68526 Ladenburg (DE); Eipper, Andreas, 67067 Ludwigshafen (DE); Fritzsche, Thomas, 69121 Heidelberg (DE); Pizzati, Gianluca, 22070 Senna Comasco (IT)
(74) Vertreter: Ellwanger & Kern Patentanwälte

(56) Entgegenhaltungen:
- EP-A- 1 839 836
- WO-A-2007/083825
- DE-A1- 10 062 557
- DE-A1- 19 958 865
- FR-A- 2 784 050
- US-A- 6 146 562
- US-A1- 2003 209 890

## Beschreibung

Die Erfindung betrifft ein Verfahren zur Herstellung einer Instrumententafel für ein Kraftfahrzeug aus einem Kunststoff mit einer steifen Kunststoffträgerschicht und einer Schaumkunststoffoberflächenschicht durch Spritzgießen.

Geeignete Kunststoffe für die steife Kunststoffträgerschicht wie die Schaumkunststoffoberflächenschicht sind bekannt und beispielsweise in EP 1839836 A1 beschrieben.

Instrumententafeln für Kraftfahrzeuge weisen in der Regel auch einen oder mehrere Hinterschnittbereiche auf.

Als Hinterschnittbereiche werden alle Bereiche von Spritzgussteilen, vorliegend Instrumententafeln für Kraftfahrzeuge, bezeichnet, die aus der Sicht senkrecht zur Trennebene der Spritzgussform für das Spritzgussteil nicht sichtbar sind. Hierbei ist es wünschenswert, dass das die Schaumkunststoffoberflächenschicht bildende Material auch im Hinterschnittbereich auf die steife Kunststoffträgerschicht aufgebracht wird. Insbesondere soll jedoch die Sichtkante, das heißt der Übergang zwischen dem Sichtbereich und dem Hinterschnittbereich des Spritzgussteiles ästhetisch ansprechend, ebenmäßig und mit einer Schaumkunststoffoberfiächenschicht in vorgegebener Dicke ausgebildet sein.

Darüber hinaus wird an Instrumententafeln auch die Anforderung gestellt, dass beim Zünden eines Airbags, der hinter der Instrumententafel angeordnet ist, derselbe durch die Instrumententafel hindurchtritt.

Dokument DE-A 199 58 865 beschreibt eine Luftsackabdeckvorrichtung mit einer Trägerschicht, die im Abdeckbereich eines Luftsacks Sollbruchlinien aufweist, wobei eine Ausbildung von Bruchstücken insbesondere bei rigiden, bruchgefährdeten Trägerschichten vermieden werden soll.

Dokument FR-A 2 784 050 beschreibt ein Verfahren zur Herstellung eines Fertigteils, wobei auf einem Träger eine flexible Haut aus einem Kunststoff aufgebracht wird, die in einer ersten Spritzgussform vorgefertigt wird.

Es war daher Aufgabe der Erfindung, ein Verfahren zur Herstellung einer Instrumententafel aus einer steifen Kunststoffträgerschicht und einer Schaumkunststoffoberflächenschicht durch Spritzguss zur Verfügung zu stellen, das in technisch einfacher Weise gewährleistet, dass die gesamt Instrumententafel, einschließlich eines oder mehrerer Hinterschnittbereiche mit dem die Schaumkunststoffoberflächenschicht bildenden Material versehen ist und eine ebenmäßige Sichtkante aufweist, und dass darüber hinaus die Instrumententafel in dem Bereich, in dem im Bedarfsfall ein Airbag durchtreten soll, geschwächt ist.

Die Lösung besteht in einem Verfahren zur Herstellung einer Instrumententafel aus
- einer steifen Kunststoffträgerschicht und
- einer Schaumkunststoffoberflächenschicht mit einem oder mehreren Hinterschnittbereichen durch Spritzgießen in eine Spritzgussform, umfassend zwei Formhälften sowie einen Gleitkern, wobei in einem Formhohlraum zwischen den zwei Formhälften und dem Gleitkern zunächst die steife Kunststoffträgerschicht durch Spritzguss gebildet und anschließend eine Treibmittel enthaltende, die Schaumkunststoffoberflächenschicht bildende Polymerschmelze eingespritzt wird, das dadurch gekennzeichnet ist, dass
- die die Schaumkunststoffoberflächenschicht bildende Polymerschmelze dekomprimiert wird, indem die dem Hinterschnittbereich abgewandte, erste Formhälfte zusammen mit dem Gleitkern in dieselbe Richtung dergestalt verschoben wird, dass sich die Höhe des Formhohlraums im Hinterschnittbereich verkleinert und im übrigen vergrößert, wobei die die Schaumkunststoffoberflächenschicht bildende Polymerschmelze im Hinterschnittbereich komprimiert wird und im übrigen Formhohlraum expandiert und dass
- die Spritzgussform zum Entformen der Instrumententafel geöffnet wird, wobei eine Mehrzahl von Messern, die in Öffnungen in der zweiten dem Hinterschnittbereich zugewandten Formhälfte gleiten, beim Verschieben des Gleitkerns beim Öffnen der Spritzgussform die Instrumententafel durchstoßen, und wobei die Messer mit dem Gleitkern verbunden sind.

Es wurde gefunden, dass es möglich ist, das die Schaumkunststoffoberflächenschicht bildende Material auch in einem oder mehreren Hinterschnittbereichen einer Instrumententafel aufzubringen, indem die Höhe des Formhohlraumes nach Eindringen des die Schaumkunststoffoberflächenschicht bildenden Materials, d.h. in der Verfahrensphase der Dekompression, durch gemeinsame Translation einer ersten Formhälfte und des Gleitkerns dergestalt verändert wird, dass die im Hinterschnittbereich durch Verschieben des Gleitkerns verkleinert und im übrigen Bereich durch Verschieben der ersten, dem Hinterschnittbereich abgewandten Formhälfte vergrößert wird.

Insbesondere wird die Höhe des Formhohlraumes im Hinterschnittbereich von einem Wert im Bereich von 4,0 bis 12,0 mm auf einen Wert im Bereich von 0,5 bis 2,0 mm verkleinert. Gleichzeitig vergrößert sich die Höhe des Formhohlraumes im vom Hinterschnitt abgewandten Bereich um denselben Wert, das heißt von einem Wert im Bereich zwischen 0,5 und 2,0 mm auf einen Wert im Bereich zwischen 4,0 und 12,0 mm. Dadurch wechselt das Treibmittel aus der die Schaumkunststoffoberflächenschicht bildenden Polymerschmelze, das unter erhöhtem Druck, insbesondere bei einem Druck oberhalb von 300 bar absolut oder auch oberhalb von 350 bar absolut in den Formhohlraum eingespritzt wird, aus der flüssigen Form des superkritische Zustandes in die gasförmige Phase und schäumt dabei das die Schaumkunststoffoberflächenschicht bildende Polymer auf.

Im Bereich des einen oder der mehreren Hinterschnitte weist der Formhohlraum zunächst eine größere Höhe, insbesondere im Bereich zwischen 4,0 und 12,0 mm auf. Dieser wird mit der die Schaumkunststoffoberflächenschicht bildende Polymerschmelze gefüllt. Diese wird durch Verringerung der Höhe des Formhohlraums in dem oder den Hinterschnittbereichen komprimiert, wobei das Polymer je nach Verfahrensbedingungen, insbesondere Temperatur und Druck, mehr oder weniger stark zu schäumen beginnt.

Indem eine Mehrzahl von Messern beim Verschieben des Gleitkerns beim Öffnen der Spritzgussform in Öffnungen in der zweiten, dem Hinterschnittbereich abgewandten Formhälfte der Spritzgussform gleiten, wird gleichzeitig mit dem Aufbringen einer Kunststoffoberflächenschicht im Hinterschichtbereich durch Verschiebung des Gleitkernes der Spritzgussform die Instrumententafel gezielt in dem Bereich geschwächt, durch den im Bedarfsfall ein Airbag durchtreten soll.

Die Messer können in einer Ausführungsvariante dergestalt ausgebildet sein, dass sich ihre Schneide auf einen Punkt reduziert, und dass die Messer somit als Nadeln ausgebildet sind.

Die Mehrzahl von Messern, die auch als Nadeln ausgebildet sein können, sind mit dem Gleitkern fest verbunden.

Die Bewegung der Messer beim Öffnen der Spritzgussform kann insbesondere hydraulisch oder pneumatisch gesteuert werden.

Hierzu sind eine Vielzahl, insbesondere 4 bis 5 Messer pro cm², auf einer Fläche angeordnet, durch die im Bedarfsfall ein Airbag durch die Instrumententafel durchtreten soll, und die insbesondere 100 bis 5000 cm² aufweist.

Die genannte Fläche ist bezüglich ihrer Geometrie nicht eingeschränkt, sie kann insbesondere rund oder rechteckig sein. Die Messer sind bevorzugt starr mit dem Gleitkern verbunden, und sind in ihrer Länge und Orientierung dergestalt ausgebildet, dass sie beim Bewegen des Gleitkerns die steife Kunststoffträgerschicht und die Schaumkunststoffoberflächenschicht der Instrumententafel durchstoßen und dieselbe somit schwächen.

Die Erfindung wird im Folgenden anhand einer Zeichnung näher erläutert.

Es zeigen im Einzelnen:
- Figur 1: einen Schnitt durch eine Spritzgussform zur Durchführung des erfindungsgemäßen Verfahrens zur Herstellung einer Instrumententafel mit einem Hinterschnittbereich und
- Figuren 2A, 2B, 2E und 2F: Schnitte durch eine Spritzgussform, mit Darstellung des Airbag-Bereichs in den Figuren 2C, 2D und 2G.

In den Figuren bezeichnen gleiche Bezugszeichen gleiche oder entsprechende Merkmale.

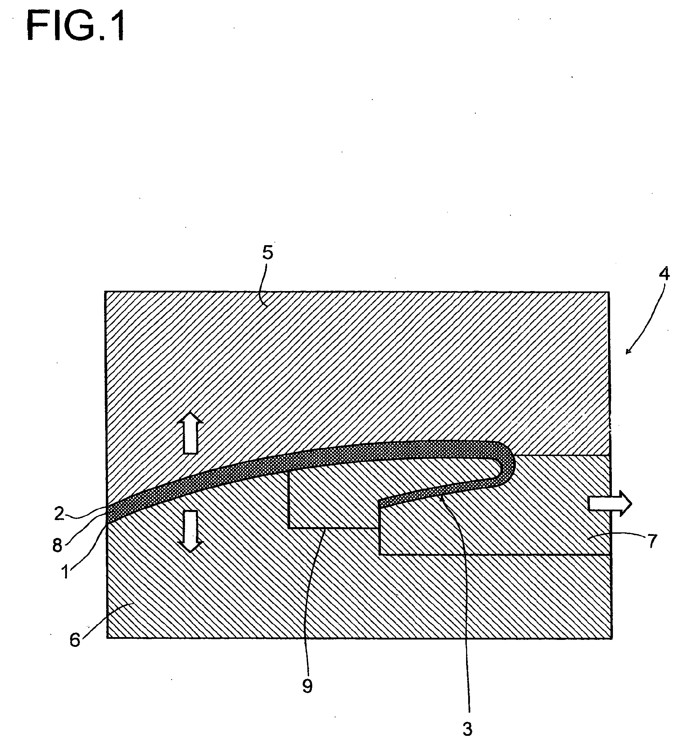

Figur 1 zeigt einen Schnitt durch eine Spritzgussform 4 zur Durchführung des erfindungsgemäßen Verfahrens zur Herstellung einer Instrumententafel mit einer steifen Kunststoffträgerschicht 1 und einer Schaumkunststoffoberflächenschicht 2, mit einem Hinterschnittbereich 3, wobei die Spritzgussform 4 zwei Formhälften 5 und 6 sowie einen Gleitkern 7 aufweist. Zwischen den beiden Formhälften 5 und 6 sowie dem Gleitkern 7 wird ein Formhohlraum 8 ausgebildet. Mit dem Gleitkern 7 sind Nadeln 9 starr verbunden, die die steife Kunststoffträgerschicht 1 und die Schaumkunststoffoberflächenschicht 2 bei der Bewegung des Gleitkernes 7 im Hinterschnittbereich 3 durchstoßen.

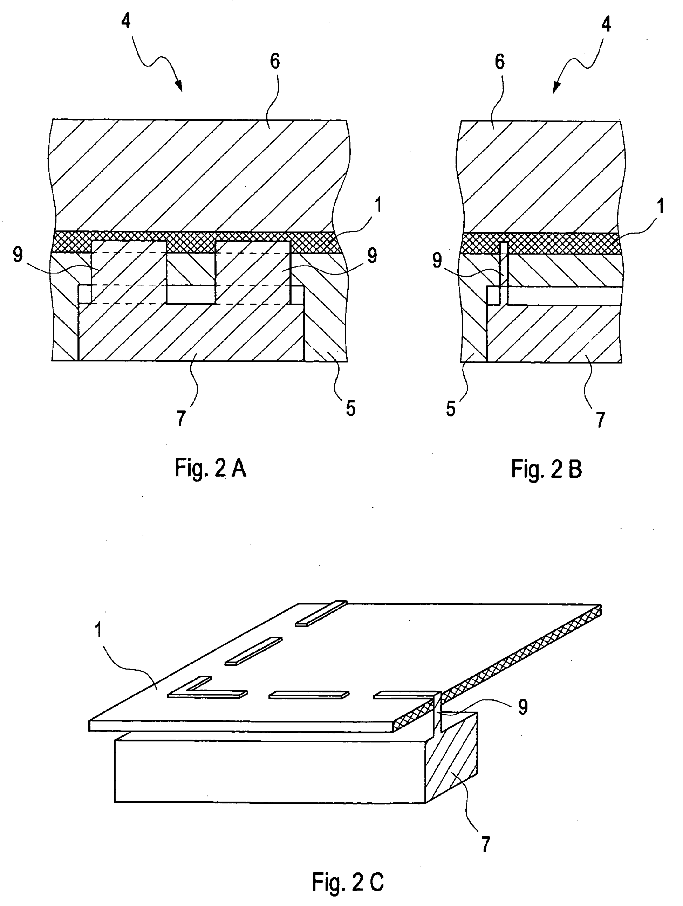

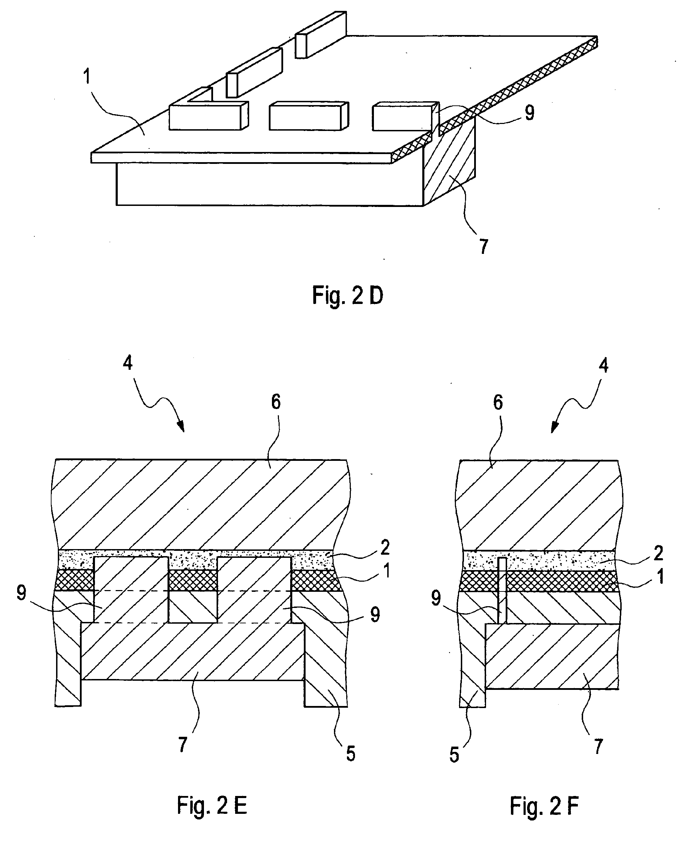

Die Figuren 2A und 2B zeigen gegeneinander um 90° verdrehte Schnitte einer Spritzgussform 4 zur Durchführung einer nicht erfindungsgemäßen Ausführungsvariante mit Schwächung im Bereich, durch den im Bedarfsfall ein Airbag durchtreten soll. Die Spritzgussform 4 umfasst zwei Formhälften 5 und 6 sowie einen Gleitkern 7. Mit dem Gleitkern 7 sind Messer 9 verbunden, die bei der Bewegung des Gleitkernes 7 die Instrumententafel im Bereich, durch den im Bedarfsfall ein Airbag durchtreten soll, durchstoßen. Die Schnittdarstellungen in den Figuren 2A und 2B verdeutlichen den Verfahrensschritt, bei dem zunächst die Kunststoffträgerschicht 1 eingespritzt ist, mit Darstellung des Bereichs, in dem im Bedarfsfall ein Airbag durchtreten soll, in den Figuren 2C und 2D.

Die Schnittdarstellungen in den Figuren 2E und 2F verdeutlichen den Verfahrensschritt, wonach auch die Schaumkunststoffoberflächenschicht 2 eingespritzt ist.

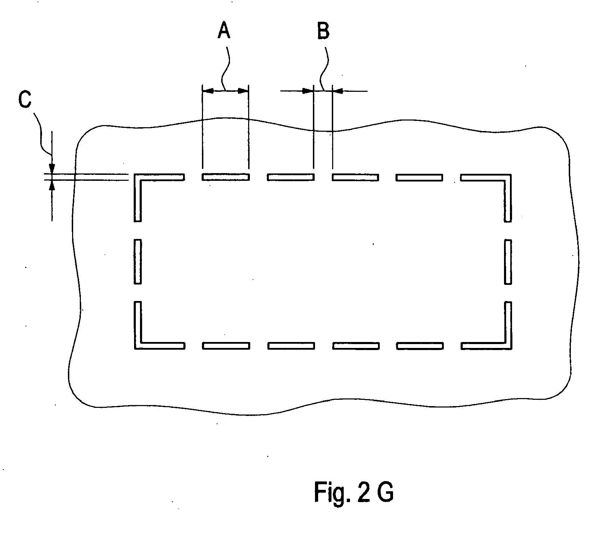

Die Darstellung in Figur 2G zeigt den Airbag-Bereich, mit Schwächungen an den markierten Stellen, sowie mit Angabe der Dimensionen A, B und C für die Bereiche, die durch die Messer 9 geschwächt sind, wobei, in Abhängigkeit des eingesetzten Kunststoffs, A bevorzugt im Bereich von etwa 7 bis 40 mm, B im Bereich von etwa 1 bis 7 mm und C etwa im Bereich von 0,5 bis 5 mm, liegt.

Die Bewegung des Gleitkerns 7 mit integrierten Messern 9 erfolgt vorteilhaft während der Dekompressionsphase, mit der Folge, dass die Schaumkunststoffoberflächenschicht ohne Probleme bezüglich Dickenunterschieden, Lufteinschlüssen oder Schweißnähten eingespritzt werden kann.

## Patentansprüche

1. Verfahren zur Herstellung einer Instrumententafel aus
- einer steifen Kunststoffträgerschicht (1) und
- einer Schaumkunststoffoberflächenschicht (2) mit einem oder mehreren Hinterschnittbereichen (3) durch Spritzgießen in eine Spritzgussform (4), umfassend zwei Formhälften (5,6) sowie einen Gleitkern (7), wobei in einem Formhohlraum (8) zwischen den zwei Formhälften (5, 6) und dem Gleitkern (7) zunächst die steife Kunststoffträgerschicht (1) durch Spritzguss gebildet und anschließend eine Treibmittel enthaltende, die Schaumkunststoffoberflächenschicht (2) bildende Polymerschmelze eingespritzt wird, **dadurch gekennzeichnet, dass**
- die die Schaumkunststoffoberflächenschicht bildende Polymerschmelze dekomprimiert wird, indem die dem Hinterschnittbereich abgewandte, erste Formhälfte (5) zusammen mit dem Gleitkern (7) in dieselbe Richtung dergestalt verschoben wird, dass sich die Höhe des Formhohlraums (8) im Hinterschnittbereich (1) verkleinert und im übrigen vergrößert, wobei die die Schaumkunststoffoberflächenschicht (2) bildende Polymerschmelze im Hinterschnittbereich (1) komprimiert wird und im übrigen Formhohlraum (8) expandiert und dass
- die Spritzgussform zum Entformen der Instrumententafel geöffnet wird, wobei eine Mehrzahl von Messern (9), die in Öffnungen in der zweiten dem Hinterschnittbereich zugewandten Formhälfte (6) gleiten, beim Verschieben des Gleitkerns (7) beim Öffnen der Spritzgussform die Instrumententafel durchstoßen und wobei die Messer (9) mit dem Gleitkern (7) verbunden sind.

2. Verfahren nach Anspruch 1, **dadurch gekennzeichnet, dass** die Messer (9) als Nadeln ausgebildet sind.

3. Verfahren nach einem der Ansprüche 1 oder 2, **dadurch gekennzeichnet, dass** durch Verschieben der ersten Formhälfte (5) zusammen mit dem Gleitkern (7) der Formhohlraum im Hinterschnittbereich (1) von einer Höhe im Bereich von 4,0 bis 12,0 mm auf eine Höhe im Bereich von 0,5 bis 2,0 mm verkleinert wird.

4. Verfahren nach einem der Ansprüche 1 bis 3, **dadurch gekennzeichnet, dass** der Bereich, in dem im Bedarfsfall ein Airbag durch die Instrumententafel treten soll, eine Fläche im Bereich von 100 bis 5000 cm² aufweist und dass in diesem Bereich die Instrumententafel durch Hindurchtreten von 4 bis 5 Messern (9) pro cm² geschwächt wird.

## Claims

1. A method for producing an instrument panel from
- a rigid plastic carrier layer (1) and
- a foam plastic surface layer (2) with one or more undercut regions (3) by injection molding into an injection mold (4), comprising two mold halves (5, 6) and a sliding core (7), the rigid plastic carrier layer (1) first being formed by injection molding in a mold cavity (8) between the two mold halves (5, 6) and the sliding core (7), and subsequently a polymer melt comprising blowing agent and forming the foam plastic surface layer (2) being injected, wherein
- the polymer melt forming the foam plastic surface layer is decompressed, by the first mold half (5), facing away from the undercut region, being displaced together with the sliding core (7) in the same direction in such a way that the height of the mold cavity (8) is reduced in the undercut region (1) and is otherwise increased, the polymer melt forming the foam plastic surface layer (2) being compressed in the undercut region (1) and expanded in the rest of the mold cavity (8), and wherein
- the injection mold is opened for demolding the instrument panel, a plurality of knives (9) which slide in openings in the second mold half (6) facing toward the undercut region, piercing through the instrument panel when the sliding core (7) is displaced during the opening of the injection mold and wherein
- the knives (9) are connected to the sliding core (7).

2. The method according to claim (1), wherein the knives (9) are designed as needles.

3. The method according to one of the claims 1 to 3, wherein the mold cavity is reduced in the undercut region (1) from a height in the range from 4.0 to 12.0 mm to a height in the range from 0.5 to 2.0 mm by facing away the first mold half (5) together with the sliding core (7).

4. The method according to one of claims 1 to 3, wherein the region in which an airbag is intended to pass through the instrument panel if need be comprises a surface area in the range from 100 to 5000 cm² and wherein the instrument panel is weakened in this region by being passed through by 4 to 5 needles per cm².

## Revendications

1. Procédé de fabrication d'un tableau de bord constitué de :
- une couche rigide de support (1) en matière synthétique et
- une couche superficielle (2) en matière synthétique moussée présentant une ou plusieurs parties (3) en contre-dépouille, obtenue par moulage par injection dans un moule (4) de moulage par injection comprenant deux moitiés de moule (5, 6) ainsi qu'un noyau coulissant (7),
la couche rigide de support (1) en matière synthétique étant d'abord formée par moulage par injection dans la cavité de moule (8) située entre deux moitiés de moule (5, 6) et le noyau coulissant (7) et en injectant ensuite un polymère fondu contenant un agent moussant et qui forme la couche superficielle (2) en matière synthétique moussée,
**caractérisé en ce que**
- le polymère fondu qui forme la couche superficielle en matière synthétique moussée est décomprimé en déplaçant dans la même direction la première moitié de moule (5), non tournée vers la partie en contre-dépouille, en même temps que le noyau coulissant (7), de telle sorte que la hauteur de la cavité de moule (8) diminue dans la partie en contre-dépouille (1) et augmente ailleurs, le polymère fondu formant la couche superficielle (2) en matière synthétique moussée étant comprimé dans la partie (1) en contre-dépouille et expansé dans le reste de la cavité de moule (8) et
**en ce que** le moule de moulage par injection est ouvert pour démouler le tableau de bord, plusieurs lames (9) qui coulissent dans des ouvertures ménagées dans la deuxième moitié de moule (6) tournée vers la partie en contre-dépouille traversant le tableau de bord lors du déplacement du noyau coulissant (7) lors de l'ouverture du moule de moulage par injection, les lames (9) étant liées au noyau coulissant (7).

2. Procédé selon la revendication 1, **caractérisé en ce que** les lames (9) sont configurées comme aiguilles.

3. Procédé selon l'une des revendications 1 ou 2, **caractérisé en ce que** le coulissement de la première moitié de moule (5) en même temps que la noyau coulissant (7) rétrécit la cavité de moule dans la partie en contre-dépouille (1) depuis une hauteur de l'ordre de 4,0 à 12,0 mm jusqu'à une hauteur de l'ordre de 0,5 à 2,0 mm.

4. Procédé selon l'une des revendications 1 à 3, **caractérisé en ce que** la partie dans laquelle un coussin gonflable de sécurité doit si nécessaire traverser le tableau de bord présente une surface de l'ordre de 100 à 5 000 cm² et **en ce que** dans cette partie, le tableau de bord est affaibli en étant traversé par 4 à 5 lames (9) par cm².
